# EUROPEAN PATENT APPLICATION

(11) **EP 4 432 385 A1**
(43) Date of publication of application: **18.09.2024**
(21) Application number: 21963692.5
(22) Date of filing: 15.11.2021
(51) Int. Cl.: H01M 4/13, H01M 10/0525

(54) **ELECTRODE AND MANUFACTURING METHOD THEREFOR, ELECTROCHEMICAL DEVICE, AND ELECTRONIC DEVICE**

(71) Applicant: Dongguan Amperex Technology Limited, Dongguan City, Guangdong Province 523000 (CN)
(72) Inventor: LIU, Mingju, Dongguan, Guangdong 523000 (CN); LI, Yajie, Dongguan, Guangdong 523000 (CN); ZHANG, Qingwen, Dongguan, Guangdong 523000 (CN)
(74) Representative: Icosa
(86) International application number: PCT/CN2021/130625
(87) International publication number: WO 2023/082245

(57) **Abstract**

This application discloses an electrode and a preparation method thereof, an electrochemical device, and an electronic device. The electrode includes a current collector and an active material layer located on one or two sides of the current collector. When the active material layer is thermo gravimetrically analyzed in an inert atmosphere at a temperature rise rate of 10 °C/min, results of the thermogravimetric analysis show that a mass change of the active material layer at 200 °C to 800 °C is 0% to 0.2%. This indicates that in the electrode disclosed herein, the active material layer is of high electrical conductivity, and can achieve an increased thickness without deteriorating performance, thereby increasing the energy density of the electrochemical device.

## Description

### TECHNICAL FIELD

This application relates to the field of electrochemical energy storage, and in particular, to an electrode and a preparation method thereof, an electrochemical device, and an electronic device.

### BACKGROUND

By virtue of the advantages of a high energy density, a high power, and a long cycle life, electrochemical devices such as a lithium-ion battery are widely used in various fields. With the development of technology, the requirements on the energy density of the electrochemical devices are increasingly higher. Some techniques for increasing the energy density of an electrochemical device are to increase the capacity or voltage of an active material of the electrochemical device, and some other techniques for increasing the energy density are to increase the content of the active material per unit volume and reduce the content of inactive materials. By reducing the thickness of a current collector or separator, the proportion of inactive materials within a formula is reduced. A relatively thick electrode and other approaches can also reduce the proportion of inactive materials. However, in practical applications, the thicknesses of the current collector and separator have been reduced to near the limit. Therefore, the remaining approach is to increasing the thickness of the electrodes. However, an excessive increase in the thickness of the electrodes may impair the performance of the electrochemical device, and it is impracticable to increase the thickness of the electrodes significantly. Therefore, how to increase the energy density of an electrochemical device while ensuring high performance of the electrochemical device is still a pressing challenge.

### SUMMARY

Some embodiments of this application provide an electrode and a preparation method thereof, an electrochemical device, and an electronic device. When an active material layer of the electrode is thermogravimetrically analyzed in an inert atmosphere at a temperature rise rate of 10 °C/min, results of the thermogravimetric analysis show that a mass change of the active material layer at 200 °C to 800 °C is 0% to 0.2%, thereby improving electrical conductivity of the active material layer, and increasing the energy density of the electrochemical device.

Some embodiments of this application disclose an electrode. The electrode includes a current collector and an active material layer located on one or two sides of the current collector. When the active material layer is thermogravimetrically analyzed in an inert atmosphere at a temperature rise rate of 10 °C/min, results of the thermogravimetric analysis show that a mass change of the active material layer at 200 °C to 800 °C is 0% to 0.2%. The active material layer in this application is of high electrical conductivity, thereby improving the performance and energy density of the electrochemical device.

In some embodiments of this application, the results of the thermogravimetric analysis show that the number of weight loss peaks of the active material layer at 200 °C to 800 °C is 0. This indicates that the content of the polymer compound in the active material layer in this application is zero or very low, thereby facilitating conduction of ions and electrons in the active material layer.

In some embodiments of this application, the electrode is a positive electrode or a negative electrode. In some embodiments, the electrode is a negative electrode, the active material layer is a negative active material layer, the current collector is a negative current collector, and a compaction density ρ₁ of the negative active material layer is greater than or equal to 0.6 g/cm³. The relatively high compaction density improves the energy that can be stored per unit volume of the electrochemical device. In some embodiments, the thickness h₁ of the negative active material layer on a single side of the negative current collector is greater than or equal to 10 µm. The large thickness improves the energy density of the electrochemical device. In some embodiments, the porosity n₁ of the negative active material layer satisfies: 35% ≥ n₁ ≥ 25%. The porosity that is set to an appropriate value ensures a high energy density in addition to a good infiltration effect of the electrolyte solution and a high electrical conductivity. In some embodiments, the resistivity of the negative active material layer is 0.01 Ω·cm to 50 Ω·cm, indicating that the negative active material layer of this application is of high electrical conductivity and improves the charging and discharging performance of the electrochemical device. In some embodiments, the negative active material layer includes a negative electrode material. The negative electrode material includes at least one of lithium titanium oxide, a silicon-based material, a tin-based material, a lithium metal material, or a carbon material.

In some embodiments of this application, the electrode is a negative electrode. The active material layer is a negative active material layer. The current collector is a negative current collector. A compaction density ρ₁ of the negative active material layer satisfies: 1.85 g/cm³ ≥ ρ₁ ≥ 0.65 g/cm³. Such settings improve the energy density of the electrochemical device. In some embodiments, the thickness h₁ of the negative active material layer on a single side of the negative current collector satisfies: 1500 µm ≥ h₁ ≥ 15 µm, thereby preventing the active material layer from falling off while improving the energy density of the electrochemical device.

In some embodiments of this application, the compaction density ρ₁ of the negative active material layer satisfies: 1.83 g/cm³ ≥ ρ₁ ≥ 1.0 g/cm³. In some embodiments of this application, the thickness h₁ of the negative active material layer on a single side of the negative current collector satisfies: 150 µm ≥ h₁ ≥ 30 µm.

In some embodiments of this application, the electrode is a positive electrode. The active material layer is a positive active material layer. The current collector is a positive current collector. A compaction density ρ₂ of the positive active material layer satisfies: ρ₂ ≥ 2 g/cm³. Such settings improve the energy density of the electrochemical device. In some embodiments, the thickness h₂ of the positive active material layer on a single side of the positive current collector is greater than or equal to 20 µm, thereby improving the energy density of the electrochemical device. In some embodiments, the porosity n₂ of the positive active material layer satisfies: 20% ≥ n₂ ≥ 15%, thereby ensuring a good infiltration effect of the electrolyte solution and a high electrical conductivity without impairing the energy density significantly. In some embodiments, the resistivity of the positive active material layer is 0.1 Ω·cm to 500 Ω·cm, thereby achieving a high electrical conductivity. In some embodiment, the positive active material layer includes a positive electrode material. The positive electrode material includes at least one of lithium iron phosphate, lithium nickel cobalt manganese oxide, lithium manganese oxide, lithium cobalt oxide, or lithium nickel cobalt aluminum oxide.

In some embodiments of this application, the electrode is a positive electrode. The active material layer is a positive active material layer. The current collector is a positive current collector. The compaction density ρ₂ of the positive active material layer satisfies: 4.25 g/cm³ ≥ ρ₂ ≥ 2.3 g/cm³. Such settings prevent the positive active material layer from falling off or fragmenting while improving the energy density. In some embodiments, the thickness h₂ of the positive active material layer on a single side of the positive current collector satisfies: 1500 µm ≥ h₂ ≥ 25 µm, thereby avoiding a higher requirement on the bonding force between the positive active material layer and the positive current collector while improving the energy density of the electrochemical device. In some embodiments of this application, the compaction density ρ₂ of the positive active material layer satisfies: 4.23 g/cm³ ≥ ρ₂ ≥ 4.0 g/cm³. In some embodiments, the thickness h₂ of the positive active material layer on a single side of the positive current collector satisfies: 130 µm ≥ h₂ ≥ 26 µm.

In some embodiments of this application, the active material layer includes a first conductive agent and a second conductive agent. The first conductive agent includes carbon nanotubes. The second conductive agent includes at least one of carbon fibers, acetylene black, graphene, Ketjen black, or conductive carbon black. The long-range conductivity of the carbon nanotubes improves the conductivity of the active material layer, and helps to maintain the structural stability of the active material layer. In some embodiments, the active material layer includes an active material. The active material layer includes the following constituents at the following mass percent: 0 wt% < the first conductive agent ≤ 2 wt%; 0 wt% ≤ the second conductive agent ≤ 1 wt%; and, 97 wt% ≤ the active material < 100 wt%, thereby ensuring a high energy density in addition to a high electrical conductivity. In some embodiments, a diameter of each carbon nanotube is 0.5 nm to 10 nm, and a length of the carbon nanotube is 1 µm to 100 µm. Every 2 to 1000 carbon nanotubes form an aggregate. A diameter of the aggregate is 1 nm to 500 nm, and the length of the aggregate is 1 µm to 100 µm, thereby enhancing the structural stability of the active material layer.

Some embodiments of this application disclose a method for preparing an electrode. The method is applicable to manufacturing any one of the electrodes disclosed herein. The method includes: applying a slurry of the active material layer to at least one surface of the current collector, drying the slurry, and cold-pressing the current collector to obtain a preliminary electrode; and processing the preliminary electrode to obtain the electrode, where the processing the preliminary electrode includes: performing a plasma treatment on the preliminary electrode in a vacuum environment under the following conditions: a plasma power is 0.5 kW to 5 kW, a gas source includes at least one of nitrogen, argon, or carbon tetrafluoride, a gas flow rate is 3000 sccm to 5000 sccm, a temperature is 20 °C to 60 °C, and a treatment duration is 1 min to 60 min; or, performing a heat treatment on the preliminary electrode in a vacuum or inert gas environment under the following conditions: a heat treatment temperature is higher than 200 °C, and a heat treatment duration is not less than 5 min; or, using a laser beam to strike the preliminary electrode in a vacuum or inert gas environment under the following conditions: a laser intensity is 30 W to 100 W, a striking duration is 1 s to 600 s, and the spacing between the laser beam and the preliminary electrode is 3 cm to 10 cm.

This application discloses an electrochemical device. The electrochemical device includes an electrode. The electrode is any one of the electrodes disclosed herein; or the electrode is an electrode prepared by the electrode preparation method disclosed herein.

This application discloses an electronic device containing the electrochemical device disclosed herein.

Some embodiments of this application disclose an electrode. The electrode includes a current collector and an active material layer located on one or two sides of the current collector. When the active material layer is thermogravimetrically analyzed in an inert atmosphere at a temperature rise rate of 10 °C/min, results of the thermogravimetric analysis show that a mass change of the active material layer at 200 °C to 800 °C is 0% to 0.2%. This indicates that in the electrode disclosed herein, the active material layer is of high electrical conductivity, and can achieve an increased thickness without deteriorating performance, thereby increasing the energy density of the electrochemical device that employs the electrode.

### BRIEF DESCRIPTION OF DRAWINGS

The foregoing and other features, advantages, and aspects of embodiments of the present disclosure become more apparent with reference to the drawings and the following specific implementations. Throughout the drawings, identical or similar reference numerals represent identical or similar elements. Understandably, the drawings are merely illustrative, and components and elements are not necessarily drawn to scale.

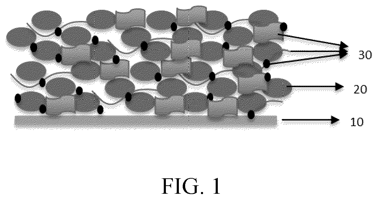

FIG. 1 is a schematic diagram of an electrode according to an embodiment of this application.

### DETAILED DESCRIPTION OF EMBODIMENTS

The following embodiments enable a person skilled in the art to understand this application more comprehensively, but without limiting this application in any way.

Some techniques for improving the energy density of an electrochemical device are to increase the thickness of an active material layer in the electrode. The increased thickness of the active material layer in the electrode may be excessive and deteriorate the electrical conductivity of the active material layer. To improve the electrical conductivity of the active material layer, a plurality of active material layers are adopted in some techniques. However, the process of laminating and cold-pressing a plurality of single layers is complicated, and it is inevitable that the original compaction density and porosity of each single layer are changed when the plurality of layers are cold-pressed again. In addition, different layers may come apart due to weak bonding between layers, thereby affecting the conduction of electrons and ions, and deteriorating the cycle performance. In some other techniques, a laser beam is used to perforate the active material layer. However, the laser perforation is inefficient and costly, and the perforation process is prone to impair the energy density. In some other techniques, a pore-forming agent solution is applied to a surface of the electrode. However, this approach inevitably leads to dissolution of the surface of the electrode. In addition, the depth of a pore formed by the pore-forming agent is limited, and makes limited improvement for the side near the current collector. The above techniques have solved the ion transport from the electrolyte solution to the surface of the active material by different methods, but the ion transport from the surface of the active material to the interior of the active material layer remains unchanged. The obstruction of ion transport and long-range electron transport still exists, and the improvement effect is low.

Some embodiments of this application provide an electrode to improve the electrical conductivity of the active material layer of the electrode, and weaken the obstruction of ion transport, thereby improving the energy density of the electrochemical device that employs the electrode. In some embodiments, the electrode may be an electrode plate. The electrode includes a current collector and an active material layer located on one or two sides of the current collector. When the active material layer is thermo gravimetrically analyzed in an inert atmosphere at a temperature rise rate of 10 °C/min, results of the thermogravimetric analysis show that a mass change of the active material layer at 200 °C to 800 °C is 0% to 0.2%. In some embodiments, a detection accuracy of the thermogravimetric analyzer is 0.2%. In these embodiments, the mass change of the active material layer is not greater than the detection accuracy. This indicates that the content of the polymer compound in the active material layer in this application is zero or very low, thereby facilitating conduction of ions and electrons in the active material layer and improving the electrical performance of the electrochemical device.

In some embodiments of this application, the results of the thermogravimetric analysis show that the number of weight loss peaks of the active material layer at 200 °C to 800 °C is 0. In some embodiments, if the active material layer contains a polymer compound such as a polymer binder, a weight loss peak may be caused by thermal decomposition in a thermogravimetric analysis performed at 200 °C to 800 °C. By contrast, in this application, the active material layer is free from the weight loss peak at 200 °C to 800 °C. This indicates that the active material layer hereof contains no polymer compound, so that the conduction of electrons and ions of the active material layer is prevented from being affected by an organic compound in the active material layer, thereby improving the performance of the active material layer in conducting ions and electrons. In this way, when the energy density of the electrochemical device is increased by increasing the thickness of the active material layer, the electrical performance of the electrochemical device is prevented from being deteriorated by the increased thickness of the active material layer by virtue of the high electrical conductivity of the active material layer. As can be seen from above, in the electrode disclosed herein, the active material layer is of high electrical conductivity, thereby improving the performance and energy density of the electrochemical device that employs the electrode.

In some embodiments of this application, the electrode is a positive electrode or a negative electrode. For example, the electrode is a positive electrode of an electrochemical device or a negative electrode of an electrochemical device. In some embodiments, the electrode is a negative electrode, the active material layer is a negative active material layer, and the current collector is a negative current collector. The negative current collector may be a copper foil, an aluminum foil, a steel foil, or the like, without being limited herein. In some embodiments, the compaction density ρ₁ of the negative active material layer is greater than or equal to 0.6 g/cm³. The relatively high compaction density indicates that the mass of the active material layer borne per unit volume of the electrode is relatively high. With a higher mass of the active material layer, more energy can be stored per unit volume of the electrochemical device, thereby increasing the energy density. In some embodiments, the compaction density ρ₁ of the negative active material layer satisfies: 1.85 g/cm³ ≥ ρ₁ ≥ 0.65 g/cm³, and optionally, 1.83 g/cm³ ≥ ρ₁ ≥ 1.0 g/cm³, thereby improving the energy density of the electrochemical device. In some embodiments, by controlling the compaction density of the negative active material layer to be not less than 1.0 g/cm³, a high energy density of the electrochemical device can be further ensured. By controlling the compaction density of the negative active material layer to be not greater than 1.83 g/cm³, the particles in the active material layer are prevented from being fragmented due to an excessive compaction density, where the fragmentation of the particles increases the consumption of the electrolyte solution and deteriorates the cycle performance.

In some embodiments, the thickness h₁ of the negative active material layer on a single side of the negative current collector is greater than or equal to 10 µm. In some embodiments, the large thickness of the negative active material layer increases the proportion of the active material layer in the electrochemical device, thereby improving the energy density of the electrochemical device. In some embodiments of this application, the thickness h₁ of the negative active material layer on a single side of the negative current collector satisfies: 1500 µm ≥ h₁ ≥ 15 µm, and optionally, 150 µm ≥ h₁ ≥ 30 µm. By controlling the thickness of the negative active material layer to be not less than 30 µm, the negative active material layer is ensured to be relatively thick, thereby improving the overall energy density of the electrochemical device. By controlling the thickness of the negative active material layer to be not greater than 150 µm, the negative active material layer is prevented from being overly thick. When the negative active material layer is overly thick, the negative active material layer is prone to be detached from the current collector.

In some embodiments, the porosity n₁ of the negative active material layer satisfies: 35% ≥ n₁ ≥ 25%. In some embodiments, the porosity of the negative active material layer is not less than 25%, thereby ensuring that the negative active material layer is sufficiently infiltrated by the electrolyte solution, and providing sufficient transport channels for ions and electrons. Controlling the porosity of the negative active material layer to be not greater than 35% can prevent the energy density from being impaired by an overly high porosity. The porosity that is set to an appropriate value ensures a high energy density in addition to a good infiltration effect of the electrolyte solution and a high electrical conductivity.

In some embodiments, the resistivity of the negative active material layer is 0.01 Ω·cm to 50 Ω·cm, indicating that the negative active material layer of this application is of high electrical conductivity, thereby improving the electrical performance of the electrochemical device. In some embodiments, the negative active material layer includes a negative electrode material. The negative electrode material includes at least one of lithium titanium oxide, silicon suboxide, silicon, graphite, or hard carbon. For example, the negative active material layer may be a combination of at least two of such materials.

In some embodiments of this application, the electrode is a positive electrode. The active material layer is a positive active material layer. The current collector is a positive current collector. A compaction density ρ₂ of the positive active material layer satisfies: ρ₂ ≥ 2 g/cm³. The relatively high compaction density improves the energy density of the electrochemical device. In some embodiments of this application, the compaction density ρ₂ of the positive active material layer satisfies: 4.25 g/cm³ ≥ ρ₂ ≥ 2.3 g/cm³, and optionally, 4.23 g/cm³ ≥ p2 ≥ 4.0 g/cm³. The compaction density falling within such a range prevents the positive active material layer from falling off and prevents the particles of the positive active material from fragmenting while improving the energy density.

In some embodiments of this application, the thickness h₂ of the positive active material layer on a single side of the positive current collector is greater than or equal to 20 µm. The relatively thick positive active material layer can store more energy, thereby improving the energy density of the electrochemical device. In some embodiments, the thickness h₂ of the positive active material layer on a single side of the positive current collector satisfies: 1500 µm ≥ h₂ ≥ 25 µm, and optionally, 130 µm ≥ h₂ ≥ 26 µm, thereby improving the energy density of the electrochemical device, and at the same time, preventing the positive active material layer from being detached from the positive current collector due to an excessive thickness of the positive active material layer.

In some embodiments of this application, the porosity n₂ of the positive active material layer satisfies: 20% ≥ n₂ ≥ 15%, thereby ensuring a good infiltration effect of the electrolyte solution and a high electrical conductivity without impairing the energy density significantly.

In some embodiments of this application, the resistivity of the positive active material layer is 0.1 Ω·cm to 500 Ω·cm, indicating that the positive active material layer is of relatively high electrical conductivity, thereby improving the electrical performance of the electrochemical device. In some embodiment, the positive active material layer includes a positive electrode material. The positive electrode material includes at least one of lithium iron phosphate, lithium nickel cobalt manganese oxide, lithium manganese oxide, lithium cobalt oxide, or lithium nickel cobalt aluminum oxide.

In some embodiments of this application, the active material layer includes a first conductive agent and a second conductive agent. The first conductive agent includes carbon nanotubes. The carbon nanotubes may include at least one of a single-walled carbon nanotube or a multi-walled carbon nanotube. The second conductive agent includes at least one of carbon fibers, acetylene black, graphene, Ketjen black, or conductive carbon black. The long-range conductivity of the carbon nanotubes improves the conductivity of the active material layer, and helps to maintain the structural stability of the active material layer.

In some embodiments, the active material layer includes an active material. The active material layer includes the following constituents at the following mass percent: 0 wt% < the first conductive agent ≤ 2 wt%; 0 wt% ≤ the second conductive agent ≤ 1 wt%; and, 97 wt% ≤ the active material < 100 wt%, thereby ensuring a high energy density in addition to a high electrical conductivity. In some embodiments, the mass percent of the second conductive agent may be 0 wt%, but the mass percent of the first conductive agent is definitely not 0 wt%. In other words, the active material layer necessarily contains carbon nanotubes. That is because the active material layer in these embodiments of this application contains no polymer compound, and therefore, contains no polymer binder. Therefore, the structure of the active material layer can be stabilized while improving the electrical conductivity by using the carbon nanotubes.

In some embodiments of this application, a diameter of each carbon nanotube is 0.5 nm to 10 nm, and a length of the carbon nanotube is 1 µm to 100 µm. Every 2 to 1000 carbon nanotubes form an aggregate. A diameter of the aggregate is 1 nm to 500 nm, and the length of the aggregate is 1 µm to 100 µm, thereby enhancing the structural stability of the active material layer. In some embodiments, referring to FIG. 1, FIG. 1 schematically shows composition of an electrode according to an embodiment. The electrode includes a current collector 10 and an active material layer. The active material layer includes an active material 20 and a conductive agent 30. The conductive agent may include a zero-dimensional conductive agent, a one-dimensional conductive agent, and a two-dimensional conductive agent. The zero-dimensional conductive agent may include a particulate conductive agent such as conductive carbon black. The one-dimensional conductive agent may include carbon nanotubes. The two-dimensional conductive agent may include graphene. In this embodiment, the structural stability of the active material layer can be further enhanced by an aggregate. The multidimensional conductive agents that range from the zero-dimensional to two-dimensional conductive agents can more effectively fill the clearance between the active materials 20, thereby further improving the electrical conductivity of the active material layer.

Some embodiments of this application disclose a method for preparing an electrode. The method is applicable to manufacturing any one of the electrodes disclosed herein for use in an electrochemical device. The method includes: applying a slurry of the active material layer to at least one surface of the current collector, drying the slurry, and cold-pressing the current collector to obtain a preliminary electrode; and processing the preliminary electrode to obtain the electrode.

The processing the preliminary electrode includes: (i) performing a plasma treatment on the preliminary electrode in a vacuum environment under the following conditions: a plasma power is 0.5 kW to 5 kW, a gas source includes at least one of nitrogen, argon, or carbon tetrafluoride, a gas flow rate is 3000 sccm to 5000 sccm, a temperature is 20 °C to 60 °C, and a treatment duration is 1 min to 60 min; or, (ii) performing a heat treatment on the preliminary electrode in a vacuum or inert gas environment under the following conditions: a heat treatment temperature is higher than 200 °C, and a heat treatment duration is not less than 5 min, or, in some embodiments, the heat treatment temperature may be 200 °C to 800 °C, and the heat treatment duration may be 5 min to 600 min; or, (iii) using a laser beam to strike the preliminary electrode in a vacuum or inert gas environment under the following conditions: a laser intensity is 30 W to 100 W, and a striking duration is 1 s to 600 s. During the laser striking, the spacing between the laser beam and the preliminary electrode may be 3 cm to 10 cm.

By processing the electrode, the method for preparing an electrode according to some embodiments of this application can remove the polymer compound in the active material layer, thereby improving the electrical conductivity and energy density of the electrochemical device. In some embodiments of this application, the active material layer of the electrode includes an active material and a conductive agent, but includes no polymer compound (for example, polymer binder or polymer thickener), thereby preventing the polymer compound from obstructing the transport of electrons and ions.

An electrochemical device according to some embodiments of this application includes an electrode. The electrode may be an electrode disclosed in any one of the embodiments of this application, or an electrode prepared by the electrode preparation method disclosed herein. In some embodiments, the electrochemical device includes a positive electrode, a negative electrode, and a separator disposed between the positive electrode and the negative electrode. In some embodiments, the positive electrode or negative electrode may be any one of the electrodes described above. In some embodiments, the positive current collector of the positive electrode may be an aluminum foil, or may be another type of current collector commonly used in the art.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, the thickness of the separator is within a range of approximately 5 µm to 50 µm.

In some embodiments, a surface of the separator may further include a porous layer. The porous layer is disposed on at least one surface of the separator. The porous layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. In some embodiments, a diameter of a pore of the separator is within a range of approximately 0.01 µm to 1 µm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical device may be a jelly-roll structure or a stacked structure. In some embodiments, the positive electrode and/or negative electrode of the electrochemical device may be a multi-layer structure formed by winding or stacking, or may be a single-layer structure formed by stacking a single layer of positive electrode, a separator, and a single layer of negative electrode.

In some embodiments of this application, the electrochemical device includes, but is not limited to, a lithium-ion battery. In some embodiments, the electrochemical device may further include an electrolyte. The electrolyte may be one or more of a gel electrolyte, a solid-state electrolyte, or an electrolyte solution. The electrolyte solution includes a lithium salt and a nonaqueous solvent. The lithium salt is one or more selected from LiPF₆, LiBF₄, LiAsF₆, LiClO₄, LiB(C₆H₅)₄, LiCH₃SO₃, LiCF₃SO₃, LiN(S0₂CF₃)₂, LiC(SO₂CF₃)₃, LiSiF₆, LiBOB, and lithium difluoroborate. For example, the lithium salt is LiPF₆ because this lithium salt is of a high ionic conductivity and can improve cycle characteristics.

The nonaqueous solvent may be a carbonate compound, a carboxylate compound, an ether compound, another organic solvent, or any combination thereof. The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

In some embodiments of this application, using a lithium-ion battery as an example, the lithium-ion battery is prepared by: winding or stacking the positive electrode, the separator, and the negative electrode sequentially into an electrode assembly, putting the electrode assembly into a package such as an aluminum laminated film ready for sealing, injecting an electrolyte solution, and performing chemical formation and sealing; Subsequently, a performance test is performed on the prepared lithium-ion battery.

A person skilled in the art understands that the method for preparing the electrochemical device (such as a lithium-ion battery) described above is merely an example. To the extent not departing from the content disclosed herein, other methods commonly used in the art may be employed.

This application discloses an electronic device containing an electrochemical device. The electrochemical device is any one of the electrochemical devices disclosed herein. The electronic device according to this embodiment of this application is not particularly limited, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, unmanned aerial vehicle, lighting appliance, toy, game console, watch, electric tool, flashlight, camera, large household storage battery, or the like.

Some specific embodiments and comparative embodiments are enumerated below to give a clearer description of this application, using a lithium-ion battery as an example.

### Embodiment 1

**Preparing a positive electrode plate:** Mixing the positive electrode materials lithium cobalt oxide, polyvinylidene difluoride, carbon nanotubes as a first conductive agent, and conductive carbon black (Super P) as a second conductive agent at a mass ratio of 97.5: 1.0: 1.0: 0.5, adding N-methyl-pyrrolidone (NMP) as a solvent to make a slurry, and stirring well to form a slurry of the positive active material layer. Coating a positive current collector aluminum foil with the slurry evenly, and oven-drying the slurry at 90 °C to obtain a positive electrode plate.

**Preparing a negative electrode plate:** Mixing the negative electrode materials graphite, conductive agents (carbon nanotubes and conductive carbon black (Super P) mixed at a mass ratio of 2: 1), and lithium carboxymethyl cellulose at a mass ratio of 97.5: 1.5: 1.0, and adding deionized water as a solvent to form a slurry of the negative active material layer. Using a copper foil as a negative current collector, applying the slurry of the negative active material layer onto the negative current collector, and oven-drying the slurry at 90 °C. Heat-treating the dried electrode plate at a temperature of 350 °C for a duration such as 10 min, so as to obtain a negative electrode plate.

**Preparing a separator:** Using an 8 µm-thick polyethylene (PE) film as a separator.

**Preparing an electrolyte solution:** Mixing lithium hexafluorophosphate with a nonaqueous organic solvent at a mass ratio of 8: 92 in an environment with a moisture content of less than 10 ppm to prepare an electrolytic solution, where the nonaqueous organic solvent is a mixture of ethylene carbonate (EC): diethyl carbonate (DEC): propylene carbonate (PC): propyl propionate (PP): vinylene carbonate (VC) mixed at a mass ratio of 20: 30: 20: 28: 2.

**Preparing a lithium-ion battery:** Stacking the positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly into an outer package made of an aluminum laminated film, dehydrating the electrode assembly at 80 °C, injecting the electrolyte solution, and sealing the package. Performing steps such as chemical formation, degassing, and edge trimming to obtain a lithium-ion battery.

The relevant parameters of Embodiment 1 are as follows: the negative electrode material is graphite; the mass percent of the negative electrode material in the negative active material layer is 98.5%; the conductive agent in the negative active material layer is carbon nanotubes (CNT) and conductive carbon black, in which the mass ratio between the carbon nanotubes and the conductive carbon black is 2: 1; the mass percent of the conductive agent in the negative active material layer is 1.5%; the thermogravimetric mass change of the negative active material layer at 200 °C to 800 °C is 0%; and the number of weight loss peaks is 0; the resistivity of the negative active material layer is 0.1 Ω·cm; the thickness of a single negative active material layer is 75 µm; and the compaction density of the negative active material layer is 1.78 g/cm³.

Steps in Embodiments 2 to 6, 13 to 22, and 34 to 43 are the same as the steps in Embodiment 1 except parameter changes. The specific parameter changes are shown in the following table.

### Embodiment 7

**Preparing a positive electrode plate:** Mixing the positive electrode materials lithium cobalt oxide, polyvinylidene difluoride, and conductive agents (carbon nanotubes and conductive carbon black (Super P) mixed at a mass ratio of 2: 1) at a mass ratio of 97.5: 1: 1.5, adding N-methyl-pyrrolidone (NMP) as a solvent to make a slurry, and stirring well to form a slurry of the positive active material layer. Coating a positive current collector aluminum foil with the slurry evenly, oven-drying the slurry at 90 °C, and then heat-treating the current collector at a temperature of 500 °C for a duration such as 10 minutes, so as to obtain a positive electrode plate.

**Preparing a negative electrode plate:** Mixing the negative electrode materials graphite, styrene acrylate, and lithium carboxymethyl cellulose at a mass ratio of 98: 1: 1, and adding deionized water as a solvent to form a slurry of the negative active material layer. Using a copper foil as a negative current collector, applying the slurry of the negative active material layer onto the negative current collector, and oven-drying the slurry at 90 °C to obtain a negative electrode plate.

The remaining preparation steps of Embodiment 7 are the same as those of Embodiment 1.

Steps in Embodiments 8 to 11 and 23 to 33 are the same as the steps in Embodiment 7 except parameter changes. The specific parameter changes are shown in the following table.

### Embodiment 12

**Preparing a positive electrode plate:** Mixing the positive electrode materials lithium cobalt oxide, polyvinylidene difluoride, and conductive agents (carbon nanotubes and conductive carbon black (Super P) mixed at a mass ratio of 2: 1) at a mass ratio of 97.5: 1: 1.5, adding N-methyl-pyrrolidone (NMP) as a solvent to make a slurry, and stirring well to form a slurry of the positive active material layer. Coating a positive current collector aluminum foil with the slurry evenly, oven-drying the slurry, and then heat-treating the dried electrode plate at a temperature of 500 °C for a duration such as 10 minutes, so as to obtain a positive electrode plate.

**Preparing a negative electrode plate:** Mixing the negative electrode materials graphite, the conductive agent carbon nanotubes, and sodium carboxymethyl cellulose at a mass ratio of 97.5: 1.5: 1.0, and adding deionized water as a solvent to form a slurry of the negative active material layer. Using a copper foil as a negative current collector, applying the slurry of the negative active material layer onto the negative current collector, and oven-drying the slurry at 90 °C. Heat-treating the dried electrode plate at a temperature of 350 °C for a duration such as 10 min, so as to obtain a negative electrode plate.

The remaining preparation steps of Embodiment 12 are the same as those of Embodiment 1.

Steps in Embodiments 13 to 43 are the same as the steps in Embodiment 1 except parameter changes. The specific parameter changes are shown in the following table.

### Comparative Embodiment 1

**Preparing a negative electrode plate:** Mixing the negative electrode materials graphite and a binder (styrene acrylate and sodium carboxymethyl cellulose mixed at a mass ratio of 2: 1.5) at a mass ratio of 96.5: 3.5, and adding deionized water as a solvent to form a slurry of the negative active material layer. Using a copper foil as a negative current collector, applying the slurry of the negative active material layer onto the negative current collector, and oven-drying the slurry at 90 °C to obtain a negative electrode plate.

The remaining preparation steps of Comparative Embodiment 1 are the same as those of Embodiment 1. The parameter differences between Comparative Embodiment 1 and Embodiment 1 are shown in the following table.

Steps in Comparative Embodiments 2 and 3 are the same as the steps in Comparative Embodiment 1 except parameter changes. The specific parameter changes are shown in the following table.

### Comparative Embodiment 4

**Preparing a positive electrode plate:** Mixing the positive electrode materials lithium cobalt oxide, polyvinylidene difluoride, and conductive carbon black (Super P) as a conductive agent at a mass ratio of 95: 3.5: 1.5, adding N-methyl-pyrrolidone (NMP) as a solvent to make a slurry, and stirring well to form a slurry of the positive active material layer. Coating a positive current collector aluminum foil with the slurry evenly, and oven-drying the slurry at 90 °C to obtain a positive electrode plate.

The remaining preparation steps of Comparative Embodiment 4 are the same as those of Embodiment 7. The specific parameter changes are shown in the following table.

Steps in Comparative Embodiments 5 and 6 are the same as the steps in Comparative Embodiment 4 except parameter changes. The specific parameter changes are shown in the following table.

The following describes the test method of this application.

### 1. Thermogravimetric test

Thermogravimetrically analyzing the positive active material layer and negative active material layer of a prepared lithium-ion battery to determine the mass change and the number of weight loss peaks during the thermogravimetric analysis, where the test temperature is 200 °C to 800 °C, the temperature rise rate is 10 °C/min, and the test atmosphere is an inert atmosphere.

### 2. Testing the resistivity

Measuring the resistivity of the positive active material layer and the negative active material layer by using a resistance tester. Measuring the electrode plate directly by using a probe capable of controlling pressure on both the upper and lower surfaces. Loading an AC current to the positive electrode plate or negative electrode plate under test, applying a pressure (0.35 T) to the active material layer under test at the same time, so as to obtain an overall resistance in the thickness direction of the electrode plate. At the same time, collecting the area (A) and the thickness (1) of the electrode plate under test. Calculating the resistivity of the tested electrode plate according to a resistivity formula (p = R × A/1).

### 3. Testing the alternating-current resistance

Applying a 1 KHz low AC current to the positive electrode and negative electrode of a battery, and determining the alternating-current resistance value of the battery by measuring the voltage response.

### 4. Testing the direct current resistance (DCR) at 25 °C

Charging a lithium-ion battery at a constant current of 0.5C at 25 °C until the voltage reaches 3.95 V, and then charging the battery at a constant voltage until the current drops to 0.05C. Leaving the battery to stand for 30 minutes. Discharging the battery at a current of 0.1C for a duration of 10 s (sampling the voltage value at intervals of 0.1 s, and recording the voltage values, averaged out as U₁), and then discharging the battery at a current of 1C for a duration of 360 s (sampling the voltage value at intervals of 0.1 s, and recording the voltage values, averaged out as U₂). Repeating the charging and discharging steps for 5 cycles. "1 C" is a current value at which the rated capacity of the battery can be fully discharged within 1 hour. Calculating the DCR of the battery according to the following formula: DCR = (U₂ - U₁)/(1C - 0.1C).

### 5. Testing the C-rate performance

Charging and discharging a battery for a first time in a 25 °C environment to discharge the battery at a constant current to a voltage of 3 V. Specifically, charging the battery at a constant current of 0.7C until the voltage reaches an upper limit of 4.48 V, and then charging the battery at a constant voltage until the current drops to 0.05C. Subsequently, discharging the battery at a constant current of 0.2C until the voltage drops to a lower limit of 3 V, and recording the 0.2C discharge capacity at this time. Subsequently, keeping charging the battery at a current of 0.7C until the voltage reaches an upper limit of 4.48 V, and then charging the battery at a constant voltage until the current drops to 0.05C. Subsequently, discharging the battery at a constant current rate of 3C until the voltage drops to a lower limit of 3 V, and recording the 3C discharge capacity at this time. 3C discharge capacity retention rate = (3C discharge capacity/0.2C discharge capacity) × 100%.

**Table 1 (to be continued)**

| | Content of negative electrode material in negative active material layer (%) | Type of negative conductive agent | Mass percent of negative conductive agent | Type of negative electrode binder | Mass percent of binder |
|---|---|---|---|---|---|
| Embodiment 1 | 98.5 | CNT: conductive carbon black = 2: 1 | 1.50% | Lithium carboxymethyl cellulose | 1.0% |
| Embodiment 2 | 98.5 | CNT: conductive carbon black = 2: 1 | 1.50% | Sodium carboxymethyl cellulose | 1.0% |
| Embodiment 3 | 98.5 | CNT: conductive carbon black = 2: 1 | 1.50% | Styrene acrylate: lithium carboxymethyl cellulose = 1: 1 | 1.0% |
| Embodiment 4 | 98.5 | CNT | 1.50% | Sodium carboxymethyl cellulose | 1.0% |
| Embodiment 5 | 97 | CNT: graphene = 2: 1 | 3.00% | Sodium carboxymethyl cellulose | 1.0% |
| Embodiment 6 | 99.5 | CNT | 0.50% | Sodium carboxymethyl cellulose | 1.0% |
| Embodiment 12 | 98.5 | CNT | 1.50% | Sodium carboxymethyl cellulose | 1.0% |
| Comparative Embodiment 1 | 95 | None | 0% | Styrene acrylate: sodium carboxymethyl cellulose = 2: 1.5 | 3.50% |
| Comparative Embodiment 2 | 97 | None | 0% | Styrene-butadiene rubber: sodium carboxymethyl cellulose = 2: 1 | 3% |
| Comparative Embodiment 3 | 98 | None | 0% | Styrene acrylate: lithium carboxymethyl cellulose = 1: 1 | 2% |

**Table 1 (continued)**

| | Thermogravimetric mass change of negative electrode (%) | Resistivity of negative active material layer (Ω·cm) | Number of weight loss peaks in thermogravimetric curve of negative electrode | AC resistance (mΩ) | DC resistance (mΩ) | 3C discharge capacity retention rate (%) |
|---|---|---|---|---|---|---|
| Embodiment 1 | 0 | 0.1 | 0 | 20.5 | 35 | 76 |
| Embodiment 2 | 0.1 | 0.1 | 0 | 20 | 35.2 | 75 |
| Embodiment 3 | 0.2 | 0.1 | 0 | 21 | 35.3 | 74.7 |
| Embodiment 4 | 0.1 | 0.05 | 0 | 18 | 33 | 80 |
| Embodiment 5 | 0.1 | 0.03 | 0 | 15 | 30 | 83 |
| Embodiment 6 | 0.1 | 0.15 | 0 | 25 | 39 | 70 |
| Embodiment 12 | 0.1 | 0.05 | 0 | 13 | 28 | 90 |
| Comparative Embodiment 1 | 3 | 1.2 | 2 | 40 | 55 | 47 |
| Comparative Embodiment 2 | 2.6 | 1.2 | 2 | 35 | 50 | 49 |
| Comparative Embodiment 3 | 1.6 | 1.2 | 2 | 30 | 45 | 55 |

Table 1 shows the preparation parameters and performance test results in Embodiments 1 to 6, Embodiment 12, and Comparative Embodiments 1 to 3. Embodiments 1 to 6 differ from Comparative Embodiments 1 to 3 only in the parameters shown in Table 1. In Embodiments 1 to 6, the negative electrode is heat-treated. In Embodiment 12, both the negative electrode and the positive electrode are heat-treated. In Comparative Embodiments 1 to 3, neither the positive electrode nor the negative electrode is heat-treated.

Referring to Table 1, for the negative active material layer in Embodiments 1 to 6 and Embodiment 12, the thermogravimetric mass change at 200 °C to 800 °C is less than 0.2%, and the number of weight loss peaks is 0. For the negative active layer in Comparative Embodiments 1 to 3, the thermogravimetric mass change at 200 °C to 800 °C is greater than 0.2%, and the number of weight loss peaks is not 0. As can be seen from Table 1, both the AC resistance and the DC resistance of the lithium-ion batteries in Embodiments 1 to 6 and Embodiment 12 are significantly lower than those in Comparative Embodiments 1 to 3. This also matches the resistivity data. The capacity retention rate after discharge at a 3C rate in Embodiments 1 to 6 and Embodiment 12 is significantly higher than that in Comparative Embodiments 1 to 3. As can be seen from the above data, after the negative active material layer is thermo gravimetrically analyzed at 200 °C to 800 °C, when the mass change of the weight loss peaks is less than 0.2%, the electrical conductivity of the negative active material layer can be improved, thereby reducing the resistance of the electrochemical device, and improving the C-rate performance.

**Table 2 (to be continued)**

| | Content of positive electrode material in positive active material layer (%) | Type of positive conductive agent | Mass percent of positive conductive agent | Type of positive electrode binder | Mass percent of positive electrode binder |
|---|---|---|---|---|---|
| Embodiment 7 | 98.5 | CNT: conductive | 1.50% | PVDF | 1.0% |
| | | carbon black = 2: 1 | | | |
| Embodiment 8 | 98.5 | CNT: conductive | 1.50% | PVDF: PVP= 1: 1 | 1.0% |
| | | carbon black = 2: 1 | | | |
| Embodiment 9 | 98.5 | CNT: conductive | 1.50% | PVP | 1.0% |
| | | carbon black = 2: 1 | | | |
| Embodiment 10 | 97 | CNT: graphene = 2: 1 | 3.00% | PVDF: PVP = 1: 1 | 1.0% |
| Embodiment 11 | 99.5 | CNT | 0.50% | PVDF: PVP= 1: 1 | 1.0% |
| Embodiment 12 | 98.5 | CNT: conductive | 1.50% | PVDF | 1.0% |
| | | carbon black = 2: 1 | | | |
| Comparative Embodiment 4 | 95 | Conductive carbon black | 1.50% | PVDF | 3.50% |
| Comparative Embodiment 5 | 96 | CNT: conductive | 1.50% | PVDF | 2.5% |
| | | carbon black = 2: 1 | | | |
| Comparative Embodiment 6 | 97.5 | CNT: conductive | 1.50% | PVDF | 1.0% |
| | | carbon black = 2: 1 | | | |

**Table 2 (continued)**

| | Thermogravimetric mass change of positive electrode (%) | Resistivity of positive active material layer (Ω·cm) | Compaction density of positive electrode (g/cm³) | Number of weight loss peaks in thermogravimetric curve of positive electrode | AC resistance (mΩ) | DC resistance (mΩ) | 3C discharge capacity retention rate (%) |
|---|---|---|---|---|---|---|---|
| Embodiment 7 | 0 | 1.0 | 4.15 | 0 | 24 | 39 | 70 |
| Embodiment 8 | 0.1 | 1.0 | 4.15 | 0 | 23 | 38 | 70.8 |
| Embodiment 9 | 0.2 | 1.0 | 4.15 | 0 | 23.3 | 38.5 | 70.7 |
| Embodiment 10 | 0.1 | 0.8 | 4.15 | 0 | 20 | 36 | 73 |
| Embodiment 11 | 0.1 | 3.0 | 4.15 | 0 | 28 | 41 | 68 |
| Embodiment 12 | 0 | 0.1 | 4.15 | 0 | 13 | 28 | 90 |
| Comparative Embodiment 4 | 2.8 | 70 | 4.15 | 1 | 50 | 65 | 37 |
| Comparative Embodiment 5 | 2 | 50 | 4.15 | 1 | 40 | 55 | 46 |
| Comparative Embodiment 6 | 0.8 | 50 | 4.15 | 1 | 30 | 45 | 55 |

Table 2 shows the preparation parameters and performance test results in Embodiments 7 to 12 and Comparative Embodiments 4 to 6. Embodiments 7 to 11 differ from Comparative Embodiments 4 to 6 only in the parameters shown in Table 2. In Embodiments 7 to 11, the positive electrode is heat-treated. In Embodiment 12, both the negative electrode and the positive electrode are heat-treated. In Comparative Embodiments 4 to 6, neither the positive electrode nor the negative electrode is heat-treated.

Referring to Table 2, for the positive active material layer in Embodiments 7 to 12, the thermogravimetric mass change at 200 °C to 800 °C is less than 0.2%, and the number of weight loss peaks is 0. For the positive active layer in Comparative Embodiments 4 to 6, the thermogravimetric mass change at 200 °C to 800 °C is greater than 0.2%, and the number of weight loss peaks is not 0. As can be seen from Table 2, both the AC resistance and the DC resistance of the lithium-ion batteries in Embodiments 7 to 12 are significantly lower than those in Comparative Embodiments 4 to 6. This also matches the resistivity data. The capacity retention rate after discharge at a 3C rate in Embodiments 7 to 12 is significantly higher than that in Comparative Embodiments 4 to 6. As can be seen from the above data, after the positive active material layer is thermo gravimetrically analyzed at 200 °C to 800 °C, when the mass change of the weight loss peaks is less than 0.2%, the electrical conductivity of the positive active material layer can be improved, thereby reducing the resistance of the electrochemical device, and improving the C-rate performance.

Further, as can be seen from Table 1 and Table 2, the lithium-ion battery in Embodiment 12 exhibits the lowest DC resistance and AC resistance, the highest 3C discharge capacity retention rate, and the highest overall performance. That is because, in Embodiment 12, both the negative electrode and the positive electrode are heat-treated, the thermogravimetric mass change of both the positive active material layer and the negative active material layer at 200 °C to 800 °C are less than 0.2%, and neither the positive electrode nor the negative electrode contains a polymer compound, thereby achieving the optimal kinetic performance.

**Table 3 (to be continued)**

| Embodiment | Negative electrode material | Compaction density of negative active material layer (g/cm³) | Thickness of active material layer on a single side of negative electrode (µm) | Thermogravimetric mass change of negative active material layer (%) |
|---|---|---|---|---|
| 13 | Graphite | 0.60 | 75 | 0.1 |
| 14 | Graphite | 1.00 | 75 | 0.1 |
| 2 | Graphite | 1.78 | 75 | 0.1 |
| 15 | Graphite | 1.83 | 75 | 0.1 |
| 16 | Graphite | 1.78 | 30 | 0.1 |
| 2 | Graphite | 1.78 | 75 | 0.1 |
| 17 | Graphite | 1.78 | 150 | 0.1 |
| 18 | Graphite | 1.78 | 1500 | 0.1 |
| 19 | Silicon oxide | 1.60 | 24 | 0.1 |
| 20 | Lithium titanium oxide | 1.75 | 160 | 0.1 |
| 2 | Graphite | 1.78 | 75 | 0.1 |
| 21 | Silicon | 1.60 | 12 | 0.1 |
| 22 | Hard carbon | 1.30 | 63 | 0.1 |

**Table 3 (continued)**

| Embodiment | Number of weight loss peaks of negative active material layer | Porosity of negative active material layer (%) | Resistivity of negative active material layer (Ω·cm) | AC resistance (mΩ) | DC resistance (mΩ) | 3C discharge capacity retention rate (%) |
|---|---|---|---|---|---|---|
| 13 | 0 | 35 | 0.3 | 30 | 45 | 85 |
| 14 | 0 | 34 | 0.25 | 27 | 43 | 82 |
| 2 | 0 | 30 | 0.1 | 20 | 35.2 | 75 |
| 15 | 0 | 25 | 0.08 | 18 | 33 | 73 |
| 16 | 0 | 30 | 0.1 | 10 | 25 | 92 |
| 2 | 0 | 30 | 0.1 | 20 | 35.2 | 75 |
| 17 | 0 | 30 | 0.1 | 25 | 40 | 70 |
| 18 | 0 | 30 | 0.1 | 60 | 79 | 42 |
| 19 | 0 | 33 | 0.2 | 31 | 45 | 64 |
| 20 | 0 | 25 | 0.16 | 28.5 | 42 | 67 |
| 2 | 0 | 30 | 0.1 | 20 | 35.2 | 75 |
| 21 | 0 | 32 | 0.15 | 27.5 | 41 | 65 |
| 22 | 0 | 35 | 0.05 | 13 | 27 | 87 |

Table 3 shows the preparation parameters and performance test results in Embodiment 2 and Embodiments 13 to 22. Embodiments 13 to 22 differ from Embodiment 2 only in the parameters shown in Table 3. The remaining parameters are the same.

As shown in Embodiment 2 and Embodiments 13 to 15, with the increase of the compaction density of the negative active material layer, the porosity of the negative active material layer decreases, the resistivity of the negative active material layer decreases, the AC resistance of the lithium-ion battery gradually decreases, the DC resistance of the lithium-ion battery also gradually decreases, and the 3C discharge capacity retention rate gradually decreases. As can be seen, when the compaction density of the negative active material layer is overly low, an adverse effect is caused to the AC resistance and DC resistance, that is, an adverse effect is caused to the kinetic performance, and the volumetric energy density is low. By increasing the compaction density of the negative active material layer appropriately, the resistance of the lithium-ion battery can be reduced. However, an excessive compaction density is detrimental to the C-rate performance, possibly because the overly high compaction density is detrimental to the infiltration effect of the electrolyte solution.

As shown in Embodiment 2 and Embodiments 16 to 18, with the increase in the thickness of the negative active material layer on a single side of the negative current collector, the AC resistance and DC resistance of the lithium-ion battery increase, and the 3C discharge capacity retention rate decreases. A possible reason is that the increased thickness of the negative active material layer prolongs the transport path of ions and electrons and is detrimental to electrical conductivity. However, a deficient thickness of the negative active material layer leads to a lower storage capacity of the negative electrode, and is detrimental to the energy density. Therefore, a trade-off needs to be achieved between the performance and capacity density of the lithium-ion battery.

As shown in Embodiment 2 and Embodiments 19 to 22, different negative electrode materials produce different effects. When the negative electrode material is silicon oxide, lithium titanium oxide, graphite, silicon, or hard carbon, the overall performance is superior. However, different negative electrode materials affect the resistivity, compaction density, and the like. Taking the whole into consideration, the overall performance is superior when the negative electrode material is graphite.

**Table 4 (to be continued)**

| Embodiment | Positive electrode material | Compaction density of positive active material layer (g/cm³) | Thickness of active material layer on a single side of positive electrode (µm) | Porosity of positive active material layer (%) |
|---|---|---|---|---|
| 23 | Lithium cobalt oxide | 2 | 63 | 25 |
| 24 | Lithium cobalt oxide | 4 | 63 | 20 |
| 8 | Lithium cobalt oxide | 4.15 | 63 | 17 |
| 25 | Lithium cobalt oxide | 4.25 | 63 | 15 |
| 26 | Lithium cobalt oxide | 4.15 | 25 | 17 |
| 27 | Lithium cobalt oxide | 4.15 | 26 | 17 |
| 8 | Lithium cobalt oxide | 4.15 | 63 | 17 |
| 28 | Lithium cobalt oxide | 4.15 | 130 | 17 |
| 29 | Lithium cobalt oxide | 4.15 | 1500 | 17 |
| 30 | Lithium iron phosphate | 2.3 | 63 | 25 |
| 31 | Lithium nickel cobalt manganese oxide | 3.5 | 63 | 23 |
| 8 | Lithium cobalt oxide | 4.15 | 63 | 17 |
| 32 | Lithium manganese oxide | 3.1 | 63 | 20 |
| 33 | Lithium nickel cobalt aluminum oxide | 3.5 | 63 | 23 |

**Table 4 (continued)**

| Embodiment | Resistivity of positive active material layer (Ω·cm) | Thermogravimetric mass change of positive active material layer (%) | Number of weight loss peaks of positive active material layer | AC resistance (mΩ) | DC resistance (mΩ) | 3C discharge capacity retention rate (%) |
|---|---|---|---|---|---|---|
| 23 | 5 | 0.1 | 0 | 29 | 45 | 80 |
| 24 | 3 | 0.1 | 0 | 25 | 40 | 75 |
| 8 | 1.0 | 0.1 | 0 | 23 | 38 | 70.8 |
| 25 | 0.9 | 0.1 | 0 | 20 | 35 | 73 |
| 26 | 1.0 | 0.1 | 0 | 15 | 30 | 80 |
| 27 | 1.0 | 0.1 | 0 | 16 | 31 | 79 |
| 8 | 1.0 | 0.1 | 0 | 23 | 38 | 70.8 |
| 28 | 1.0 | 0.1 | 0 | 25 | 42 | 66 |
| 29 | 1.0 | 0.1 | 0 | 39 | 55 | 56 |
| 30 | 3.0 | 0.1 | 0 | 42 | 53 | 58 |
| 31 | 1.2 | 0.1 | 0 | 24 | 40 | 69 |
| 8 | 1.0 | 0.1 | 0 | 23 | 38 | 70.8 |
| 32 | 1.5 | 0.1 | 0 | 26 | 42 | 67 |
| 33 | 2.0 | 0.1 | 0 | 33 | 47 | 63 |

Table 4 shows the preparation parameters and performance test results in Embodiment 8 and Embodiments 23 to 33. Embodiments 23 to 33 differ from Embodiment 8 only in the parameters shown in Table 4. The remaining parameters are the same.

As shown in Embodiment 8 and Embodiments 23 to 25, with the increase of the compaction density of the positive active material layer, the porosity of the positive active material layer decreases, the resistivity of the positive active material layer decreases, the AC resistance of the lithium-ion battery gradually decreases, the DC resistance of the lithium-ion battery also gradually decreases, and the 3C discharge capacity retention rate decreases first and then rises. As can be seen, when the compaction density of the positive active material layer is overly low, an adverse effect is caused to the AC resistance and DC resistance, that is, an adverse effect is caused to the kinetic performance, and the volumetric energy density is impaired. By increasing the compaction density of the negative active material layer appropriately, the resistance of the lithium-ion battery can be reduced. However, an excessive compaction density is detrimental to the C-rate performance.

As shown in Embodiment 8 and Embodiments 26 to 29, with the increase in the thickness of the positive active material layer on a single side of the positive current collector, the AC resistance and DC resistance of the lithium-ion battery increase, and the 3C discharge capacity retention rate decreases. A possible reason is that the increased thickness of the positive active material layer prolongs the transport path of ions and electrons and is detrimental to electrical conductivity. However, a deficient thickness of the positive active material layer leads to a lower storage capacity of the positive electrode, and is detrimental to the energy density. Therefore, a trade-off needs to be achieved between the performance and capacity density of the lithium-ion battery.

As shown in Embodiment 8 and Embodiments 30 to 33, different positive electrode materials produce different effects. When the positive electrode material is lithium iron phosphate, lithium nickel cobalt manganese oxide, lithium cobalt oxide, lithium manganese oxide, or lithium nickel cobalt aluminum oxide, the overall performance is superior. However, different positive electrode materials affect the resistivity, compaction density, and the like. Taking the whole into consideration, the overall performance is superior when the positive electrode material is lithium cobalt oxide.

**Table 5 (to be continued)**

| Embodiment | CNT tube diameter (nm) | CNT length (µm) | Number of CNTs in an aggregate (pcs) | Diameter of aggregate (nm) | Length of aggregate (µm) | Thermogravimetric mass change of negative active material layer (%) |
|---|---|---|---|---|---|---|
| 2 | 0.5 | 10 | 25 | 12.5 | 10 | 0.1 |
| 34 | 2 | 10 | 25 | 50 | 10 | 0.1 |
| 35 | 10 | 10 | 25 | 250 | 10 | 0.1 |
| 36 | 0.5 | 1 | 25 | 12.5 | 1 | 0.1 |
| 2 | 0.5 | 10 | 25 | 12.5 | 10 | 0.1 |
| 37 | 0.5 | 100 | 25 | 12.5 | 100 | 0.1 |
| 38 | 0.5 | 10 | 2 | 1 | 10 | 0.1 |
| 2 | 0.5 | 10 | 25 | 12.5 | 10 | 0.1 |
| 39 | 0.5 | 10 | 1000 | 500 | 10 | 0.1 |

**Table 5 (continued)**

| Embodiment | Number of weight loss peaks of negative active material layer | Resistivity of negative active material layer (Ω·cm) | AC resistance (mΩ) | DC resistance (mΩ) | 3C discharge capacity retention rate (%) |
|---|---|---|---|---|---|
| 2 | 0 | 0.05 | 20 | 35.2 | 75 |
| 34 | 0 | 0.1 | 23 | 38 | 73 |
| 35 | 0 | 0.15 | 26 | 40 | 68 |
| 36 | 0 | 0.16 | 27 | 41 | 66 |
| 2 | 0 | 0.05 | 20 | 35.2 | 75 |
| 37 | 0 | 0.03 | 16 | 31.4 | 79.5 |
| 38 | 0 | 0.04 | 19 | 34 | 76 |
| 2 | 0 | 0.05 | 20 | 35.2 | 75 |
| 39 | 0 | 0.08 | 24 | 38 | 69 |

The parameters in Embodiments 34 to 43 differ from Embodiment 2 in only the data shown in Table 5, and the remaining parameters not shown are the same as those in Embodiment 2. CNTs in Table 5 are carbon nanotubes in the positive electrode and negative electrode.

As shown in Embodiment 2 and Embodiments 34 to 35, the overall performance of the lithium-ion battery is superior when the diameter of the carbon nanotubes is 0.5 nm to 10 nm. An overly long diameter of the carbon nanotubes may be detrimental to the electrical conductivity and C-rate performance.

As shown in Embodiment 2 and Embodiments 36 to 37, with the increase in the length of the CNT tubes, the DC resistance and AC resistance are reduced, and the 3C discharge capacity retention rate is improved because the increase in the length of the carbon nanotubes improves the long-range conductivity and stabilizes the structure of the active material layer.

As shown in Embodiment 2 and Embodiments 38 to 29, with the increase in the number of carbon nanotubes included in the aggregate, the electrical conductivity and 3C discharge capacity retention rate of the lithium-ion battery decrease to some extent. The overall performance of the lithium-ion battery is superior when the number of carbon nanotubes included in the aggregate is 2 to 1000.

As shown in Embodiment 2 and Embodiments 40 to 41, with the increase in the diameter of the aggregate, the AC resistance and DC resistance of the lithium-ion battery increase, and the 3C discharge capacity retention rate decreases. Therefore, in some embodiments, the diameter of the aggregate is controlled to be 1 nm to 500 nm. This specified range can avoid an oversized diameter of the aggregate that may impair the performance of the lithium-ion battery, and avoid a deficient diameter of the aggregate that may result in failure to well stabilize the structure of the active material layer.

As shown in Embodiment 2 and Embodiments 42 to 43, with the increase in the length of the aggregate, the AC resistance and DC resistance of the lithium-ion battery decrease, and the 3C discharge capacity retention rate increases, possibly because the long aggregate improves the stability of the overall structure of the active material layer, and improves the long-range conductivity.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

## Claims

1. An electrode, wherein the electrode comprises a current collector and an active material layer disposed on one or two sides of the current collector; and a mass change of the active material layer at 200 °C to 800 °C is 0% to 0.2% according to results of a thermogravimetric analysis performed on the active material layer in an inert atmosphere at a temperature rise rate of 10 °C/min.

2. The electrode according to claim 1, wherein
the results of the thermogravimetric analysis show that a number of weight loss peaks of the active material layer at 200 °C to 800 °C is 0.

3. The electrode according to claim 1, wherein
the electrode is a negative electrode, the active material layer is a negative active material layer, and the current collector is a negative current collector.

4. The electrode according to claim 3, wherein the electrode satisfies at least one of the following conditions:
(a) a compaction density ρ₁ of the negative active material layer is greater than or equal to 0.6 g/cm³;
(b) a thickness h₁ of the negative active material layer on a single side of the negative current collector is greater than or equal to 10 µm;
(c) a porosity n₁ of the negative active material layer satisfies: 35% ≥ n₁ ≥ 25%;
(d) a resistivity of the negative active material layer is 0.01 Ω·cm to 50 Ω·cm; or
(e) the negative active material layer comprises a negative electrode material, and the negative electrode material comprises at least one of lithium titanium oxide, silicon suboxide, graphite, silicon, or hard carbon.

5. The electrode according to claim 3, wherein the electrode satisfies at least one of the following conditions:
(f) a compaction density ρ₁ of the negative active material layer satisfies: 1.85 g/cm³ ≥ ρ₁ ≥ 0.65 g/cm³; or
(g) a thickness h₁ of the negative active material layer on a single side of the negative current collector satisfies: 1500 µm ≥ h₁ ≥ 15 µm.

6. The electrode according to claim 3, wherein the electrode satisfies at least one of the following conditions:
(h) a compaction density ρ₁ of the negative active material layer satisfies: 1.83 g/cm³ ≥ ρ₁ ≥ 1.0 g/cm³; or
(i) a thickness h₁ of the negative active material layer on a single side of the negative current collector satisfies: 150 µm ≥ h₁ ≥ 30 µm.

7. The electrode according to claim 1, wherein the electrode is a positive electrode, the active material layer is a positive active material layer, the current collector is a positive current collector, and the electrode satisfies at least one of the following conditions:
(j) a compaction density ρ₂ of the positive active material layer is greater than or equal to 2 g/cm³;
(k) a thickness h₂ of the positive active material layer on a single side of the positive current collector is greater than or equal to 20 µm;
(l) a porosity n₂ of the positive active material layer satisfies: 20% ≥ n₂ ≥ 15%;
(m) a resistivity of the positive active material layer is 0.1 Ω·cm to 500 Ω·cm; or
(n) the positive active material layer comprises a positive electrode material, and the positive electrode material comprises at least one of lithium iron phosphate, lithium nickel cobalt manganese oxide, lithium manganese oxide, lithium cobalt oxide, or lithium nickel cobalt aluminum oxide.

8. The electrode according to claim 1, wherein the electrode is a positive electrode, the active material layer is a positive active material layer, the current collector is a positive current collector, and the electrode satisfies at least one of the following conditions:
(o) a compaction density ρ₂ of the positive active material layer satisfies: 4.25 g/cm³ ≥ ρ₂ ≥ 2.3 g/cm³; or
(p) a thickness h₂ of the positive active material layer on a single side of the positive current collector satisfies: 1500 µm ≥ h₂ ≥ 25 µm.

9. The electrode according to claim 1, wherein the electrode is a positive electrode, the active material layer is a positive active material layer, the current collector is a positive current collector, and the electrode satisfies at least one of the following conditions:
(q) a compaction density ρ₂ of the positive active material layer satisfies: 4.23 g/cm³ ≥ ρ₂ ≥ 4.0 g/cm³; or
(r) a thickness h₂ of the positive active material layer on a single side of the positive current collector satisfies: 130 µm ≥ h₂ ≥ 26 µm.

10. The electrode according to claim 1, wherein
the active material layer comprises a first conductive agent and a second conductive agent; and
the first conductive agent comprises carbon nanotubes, and the second conductive agent comprises at least one of carbon fibers, acetylene black, graphene, Ketjen black, or conductive carbon black.

11. The electrode according to claim 10, wherein the electrode satisfies at least one of the following conditions:
(s) the active material layer comprises an active material, and the active material layer comprises the following constituents at the following mass percent: 0 wt% < the first conductive agent ≤ 2 wt%; 0 wt% < the second conductive agent ≤ 1 wt%; and, 97 wt% ≤ the active material < 100 wt%; or
(t) a diameter of each carbon nanotube is 0.5 nm to 10 nm, a length of the carbon nanotube is 1 µm to 100 µm, every 2 to 1000 carbon nanotubes form an aggregate, a diameter of the aggregate is 1 nm to 500 nm, and a length of the aggregate is 1 µm to 100 µm.

12. A method for preparing the electrode according to any one of claims 1 to 11, wherein the method comprises:
applying a slurry of the active material layer to at least one surface of the current collector, drying the slurry, and cold-pressing the current collector to obtain a preliminary electrode; and
processing the preliminary electrode to obtain the electrode, wherein
the processing the preliminary electrode comprises:
performing a plasma treatment on the preliminary electrode in a vacuum environment under the following conditions: a plasma power is 0.5 kW to 5 kW, a gas source comprises at least one of nitrogen, argon, or carbon tetrafluoride, a gas flow rate is 3000 sccm to 5000 sccm, a temperature is 20 °C to 60 °C, and a treatment duration is 1 min to 60 min;
or,
performing a heat treatment on the preliminary electrode in a vacuum or inert gas environment under the following conditions: a heat treatment temperature is higher than 200 °C, and a heat treatment duration is not less than 5 min;
or,
using a laser beam to strike the preliminary electrode in a vacuum or inert gas environment under the following conditions: a laser intensity is 30 W to 100 W, and a striking duration is 1 s to 600 s.

13. An electrochemical device, **characterized in that** the electrochemical device comprises an electrode; and
the electrode is the electrode according to any one of claims 1 to 11; or
the electrode is an electrode prepared by the method according to claim 12.

14. An electronic device, wherein the electronic device comprises the electrochemical device according to claim 13.
